# EUROPEAN PATENT APPLICATION

(11) **EP 3 135 955 A2**
(43) Date of publication of application: **01.03.2017**
(21) Application number: 16183253.0
(22) Date of filing: 08.08.2016
(51) Int. Cl.: F16H 1/32

(54) **REDUCTION BEARING AND ELECTRIC MOTOR**

(30) Priority: 25.08.2015 EP 15182419
(71) Applicant: Shenzhen Volmen Precision Mechanical Technology Co., Ltd, Shenzhen Guangdong 518101 (CN)
(72) Inventor: VOLAK, Miroslav, 04023 Kosice (SK); BARNA, Jozef, 08001 Presov (SK)
(74) Representative: Seemann & Partner Patentanwälte mbB

(57) **Abstract**

In a reduction bearing (105, 107, 205, 207, 5, 6), the center ring (120, 121, 20, 21, 220, 221) are configured as bearing races (17, 21) for an inner of the at least two concentric rings (10) of or with rolling elements (40, 50, 51, 52, 60, 61) and the center ring (120, 121, 20, 21, 220, 221) and the outer ring (130, 171, 230, 30, 31) are configured as bearing races (17, 21) for an outer of the at least two concentric rings (10) of or with rolling elements (40, 50, 51, 52, 60, 61). The inner ring (10, 110, 111, 11, 12, 210, 211), the center ring (120, 121, 20, 21, 220, 221) and the outer ring (130, 171, 230, 30, 31) have, respectively, an inner ring extension (10, 16, 17), a center ring extension (26, 28) and an outer ring extension (36, 38) extending in an axial direction of the reduction bearing (105, 107, 205, 207, 5, 6) and lying in a common reduction stage plane (42).

## Description

The invention relates to a reduction bearing having at least three concentric rings, the at least three concentric rings including an inner ring, a center ring and an outer ring, and at least two concentric rings of or with rolling elements, wherein the inner ring and the center ring are configured as bearing races for an inner of the at least two concentric rings of or with rolling elements and the center ring and the outer ring are configured as bearing races for an outer of the at least two concentric rings of or with rolling elements. The invention further relates to an electric motor.

Radial bearings with concentric rings interposed with concentric rings of or with rolling elements are commonly used to take up radial forces while allowing rotational movement of rotating parts connected with the inner ring of the bearing around a common central axis of the concentric rings.

Gearboxes for rotational movements are known which are used to reduce a rotating speed of a rotating element being applied to an input of the gearbox into a slower rotation at an output of the gearbox. This is called a reduction action or reducing action within the present application.

Commonly known gearboxes themselves are not capable of or illsuited to bearing radial forces and are therefore usually used in combination with external or additional radial bearings. Many technical applications require reducing action but are faced with the problem that commonly known gearboxes in combination with bearings are prohibitively large. One such field of technology is robotics, which has a particularly strong need for miniaturization combined with robust and precise rotary speed reduction. Another field of technology, in which the invention can be used, is automotive, especially electric cars and electric wheels.

Accordingly, it is an object of the present invention to provide reliable and finely tunable small scale means for reducing the rotating speed of the rotating element, which in addition may be particularly suited for use in the field of robotics or electric cars or electric wheels.

This object is achieved by a reduction bearing having at least three concentric rings, the at least three concentric rings including an inner ring, a center ring and an outer ring, and at least two concentric rings of or with rolling elements, wherein the inner ring and the center ring are configured as bearing races for an inner of the at least two concentric rings of or with rolling elements and the center ring and the outer ring are configured as bearing races for an outer of the at least two concentric rings of or with rolling elements, wherein the reduction bearing has at least one reduction stage, wherein the inner ring, the center ring and the outer ring have, respectively, an inner ring extension, a center ring extension and an outer ring extension extending in an axial direction of the reduction bearing and lying in a common reduction stage plane, wherein the center ring extension is configured to transmit a wave-type reduction action between the inner ring extension and the outer ring extension.

In an advantageous embodiment the inner ring extension is disk-shaped with or without a central opening and has an outer circumferential surface having one or more peaks and the outer ring extension has an inner circumferential surface having a toothing or grooves or the inner ring extension is disk-shaped with or without a central opening and has an outer circumferential surface having a toothing or grooves and the outer ring extension has an inner circumferential surface having one or more peaks.

In an advantageous embodiment, the inner ring has at least one bearing race, wherein in particular the inner ring extension has at least one profile bearing race or has at least one, preferably two, eccentric bearing race or races, wherein in particular the center ring has at least two bearing races in the bearing part and the center ring extension has at least one radial channel with one or more radially moving elements.

In contrast to known combinations of radial bearings and gearboxes without radial bearing capacity, the inventive reduction bearing is structurally a radial bearing with an added reduction functionality in the form of at least one reduction stage for a wave-type reduction action built into extensions of the at least three concentric rings of the bearing. This integration of the wave-type reduction stage into the bearing allows for a significant miniaturization with respect to earlier solutions. In the axial direction, the reduction bearing of the invention may be a factor of two or more shorter than known combinations of bearings and gearboxes, even gearboxes of the wave-type or harmonic drive type.

This is made possible by using at least three concentric rings configured as bearing races for two concentric rings of or with rolling elements such that the three concentric rings are freely rotatable against each other while bearing radial forces, combined with the integration of a wave-type reduction stage into the extensions of the at least three concentric rings which is based on the known wave-type reduction principle, which is known to be implemented in such systems as the so-called harmonic drive or the so-called nested speed converting transmissions.

The operating principle of a wave-type reduction action is that a fast rotary motion of a innermost disk-shaped element having one or more peaks on its outer circumferential surface is translated into a slow rotary motion of an outer ring by means of an interposed circular structure which is radially flexible, or vice versa. This interposed circular structure does not rotate together with the innermost disk-shaped element, however, it assumes its shape as the innermost element rotates. The radially flexible structure has a number of teeth or of regularly spaced outwards projecting elements, whereas the outer ring has grooves or a toothing on its inner circumferential surface facing the toothing or the projecting elements of the flexible structure. The numbers of the teeth or grooves of the flexible structure and the outer ring do not match. Therefore, a rotation of the disk-shaped innermost element will induce a wave-like motion in the radially flexible structure, which may be of one piece or of a multitude of elements, and cause the teeth or projecting elements to slide into a succession of neighboring grooves in the outer ring toothing or groove structure with each passing peak of the innermost disk-shaped element, thereby transmitting the reduction action. The reduction action can also be transmitted from the outer ring having one or more peaks on an inner circumferential surface to an innermost disk-shaped element having a toothing or grooves on an outer circumferential surface.

The reduction stage may therefore, for example, comprise a radially flexible element together with a radially flexible roller bearing, similar to a harmonic drive, or radial channels and elements moving linearly within the radial channels, thus producing the radially flexible structure. This reduction stage fixes the relation of the motions between the three concentric rings of the inventive reduction bearing. Usually, one of the three rings will be affixed to a supporting structure. This is in most cases, but not necessarily, either the center ring or the outer ring. The input may be the inner ring and the output the center ring or the outer ring, whichever is not affixed to a supporting structure. The input and output may be reversed.

The reduction ratio between the rotating speed of the input and the rotating speed and direction of the output is determined by the number of peaks on the outer surface of the extension of the inner ring, the number of radial channels or teeth in the center ring and the number of grooves or teeth on the inside of the extension of the outer ring. The direction of the output is determined by whether the number of channels or teeth in or on the center ring extension is greater or smaller than the number of grooves in the extension of the outer ring.

By way of a non-limiting example, the inner ring extension may have two peaks at positions opposed to each other. Furthermore, there may be 100 grooves in the outer ring extension and 98 channels with radially moving elements in the center ring extension, or teeth, respectively, the reduction stage will have a speed ratio of 50:1 from the inner ring input to the outer ring output, while the direction of rotation the same at output and input. If, under the same circumstances, the outer ring is affixed and the center ring is taken as output, the rotation direction of the center ring will be reversed with respect to the direction of rotation of the input. Furthermore, the reduction ratio will be slightly smaller.

In one advantageous embodiment, the center ring extension has structures defining radial channels containing radially moving elements contacting the inner surface of the outer ring extension and the outer circumferential surface of the inner ring extension, wherein in particular the number of grooves in the inner circumferential surface of the outer ring extension or the outer circumferential surface of the inner ring extension is greater or smaller than the number of radial channels of the center ring extension, wherein, in particular, the structures of the center ring defining radial channels are exchangeable or of one piece with the center ring. This constitutes an embodiment the above-mentioned multi-part radially flexible structure with the radially moving elements constituting the projecting elements which are able to follow and replicate the shape of the disk-shaped inner ring extensions with its peaks as it rotates inside the center ring. This solution is mechanically stable and cost-effective.

In the case of the structures of the center ring defining radial channels being exchangeable, repair of the reduction bearing is made easy. Also, the reduction bearing is then flexible in its configuration. On the other hand, center rings with structures which are one piece with the center ring provide added stability.

In an advantageous embodiment the radial channels of the center ring extension are located in at least one row being arranged, at least substantially, parallel to the common reduction stage plane. To increase the capacity of the reduction bearing or gear box there are two or more rows of radial channels being arranged, at least substantially, parallel to the common reduction stage plane.

Preferably, a radial depth of the grooves, in particular in the inner circumferential surface of the outer ring extension, is equal to or more than a height in the radial direction of the peak or peaks, in particular on the outer circumferential surface of the inner ring extension. With this measure, it is effectively avoided that the reduction bearing may block its movement. The shape of the peaks, in particular on the outer circumferential surface of the inner ring extension, advantageously reflects the inverse of the shape of the grooves, in particular on the outer ring extension. With that, the linearly moving elements in the radial channels will have no or only very little play, thus reducing tear and wear of all components involved.

The radially moving elements preferably comprise one or more rows of sliding or rolling elements, in particular needles, balls or cylinders. This measure reduces wear and tear on the rolling elements, since the doubling or multiplying of the number of sliding or rolling elements reduces the stress on each one of them.

Advantageously, the circumferential surface having one or more peaks is replaced or formed by one or more eccentric circumferential or circular surfaces having bearing races. This embodiment leads to a reduction bearing with a very low friction. If two eccentric rings or two eccentric circumferential or circular surfaces are used, on which the rolling elements are carried, at the reduction stage the wave type reduction action is very sophisticated. The circumferential surfaces, which are advantageously of circular shape in cross section, are located at the reduction stage, preferably.

Advantageously, a radially flexible roller bearing is interposed between the outer circumferential surface of the inner ring extension and the center ring extension. The radially flexible roller bearing assumes the shape of the disk-shaped inner ring extension and transmits this shape to the radially moving elements. The outer bearing race of the radially flexible roller bearing does not rotate with respect to the center ring extension, so that there is low friction between the radially flexible roller bearing and the radially moving elements. Overall, friction is greatly reduced and efficiency enhanced.

In an alternative advantageous embodiment, the center ring extension is radially flexible and fitted around the inner ring extension by means of a flexible roller bearing so as to assume the outer shape of the inner ring extension while freely rotating around the inner ring extension, wherein an outer circumferential surface of the radially flexible center ring extension has a toothing, wherein a number of teeth on the outer circumferential surface of the radially flexible center ring extension is smaller or greater than a number of teeth on the inner circumferential surface of the outer ring extension. This alternative embodiment reduces friction with respect to the above-mentioned embodiment because it does not involve the friction prone sliding motions between the linearly moving elements and the inner ring extension and the outer ring extension.

In a further preferred embodiment the roller bearing is an integral part of the inner ring extension and/or the outer ring extension. Being an integral part of the inner ring extension and/or the outer ring extension, the roller bearing can be produced very precisely. Thus, the motion of the rotatable elements and also the rolling elements is very precise. In the state of the art roller bearings are normally extra rings, which are fitted or pressed in openings. This kind of manufacture leads to roller bearings, which are not very precisely mounted in the outer ring and/or the inner ring extensions.

In order to achieve a very high degree of space saving and miniaturization, the at least three concentric rings and the at least two concentric rings of or with rolling elements are preferably arranged in a bearing plane. The bearing plane has the added benefit of transmitting radial forces in the shortest possible pathway in one plane, i.e., without introducing cantilever forces.

Advantageously, there is an even number of peaks or, alternatively, an odd number with at least three peaks on the outer circumferential surface of the inner ring extension or on the inner circumferential surface of the outer ring extension. This feature helps eliminating radial forces in the reduction bearing since the radial force introduced into the bearing by each peak is countered by an opposing radial force from an opposing peak. The use of an odd number of peaks with a minimum of three peaks and equal spacing likewise balances any resulting radial forces by way of vector addition of the radial forces.

The number of teeth and/or grooves, in particular on the outer and central ring, should be greater than the number of peaks by a factor of 4 or more, preferably 10 or more, in order to ensure a smooth operation.

Advantageously, the inner ring and/or the center ring and/or the outer ring has or have through-holes for affixation to an external supporting structure. With this, it is possible to secure the inventive reduction bearing to an external supporting structure and choose the input and the output of the reduction bearing according to need.

A further advantageous embodiment is characterized in that a separating element is located radially between first and further rolling elements. The rolling elements are then advantageously balls or of spherical shape. Furthermore, the separating element can have a circular shaped groove to be in contact with the rolling element. There can also be two circular shaped grooves for adjacent rolling elements or adjacent balls. The separating element can advantageously contain partly a surface or completely a surface of a friction reducing material, for example like Polytetrafluoroethylene (such as Teflon^{®} by Chemours). The separating element can be completely made of a friction reducing material. With this embodiment, friction is reduced. In this embodiment, a first rolling element may have contact with the grooves of one ring and a further rolling element will be in contact with the surface having one or more peaks on the opposite ring. If the rolling elements are shaped as balls or cylinders, the rotation of the rolling elements are decoupled by means of the separating element positioned between them, and each rolling element may in this embodiment rotate with its own speed driven by the movement of the respective surface of the reduction stage to which they have contact.

A further advantage of the reduction bearing of the present invention is that the inventive reduction bearing may have a large central opening, the size of which cannot be achieved in conventional gearboxes. For this purpose, the reduction bearing advantageously has an axial central opening with a diameter of up to 90 %, in particular more than 35 %, in particular more than 50 % or 60 % or 70 %, of the outer diameter of the outer ring. The amount of the axial central opening depends in particular on the outer diameter of the outer ring and the ratio of the reduction bearing. Known gear boxes of similar type may have central openings, whose diameter, however, does not exceed 30 % of the outer diameter of the device. The inventive feature of the large central opening is especially advantageous in the field of robotics, where in many applications it is necessary to feed through bundles of electric cables, for example in the joints of robot arms, which may not have enough space for feeding through in conventional gearboxes, or in the fields of electric cars or electric wheels.

In an advantageous further development, the reduction bearing has two or more reduction stages configured such that at least one first reduction stage is drivingly connected to at least one second reduction stage, wherein the reduction stages are axially aligned with each other and/or positioned concentrically to each other. The inventive reduction bearing has the added benefit that it may comprise two or more reduction stages, each provided with a concentric three-ring bearing arrangement which may be coupled in parallel or sequentially. With this combination, very high reduction ratios may be achieved. For example, a combination of two reduction bearing stages with each a reduction factor of 100:1 will result in a reduction factor of 10.000:1 with very few parts to achieve this reduction factor.

The combination may be advantageously achieved in a so-called serial configuration or a so-called parallel configuration. In the serial configuration, a first reduction stage and a second reduction stage are axially aligned, wherein one of the inner ring, the center ring and the outer ring of the first reduction stage is connected with one of the inner ring, the center ring and the outer ring of the second reduction stage, in particular by means of a spline connection. Even with the two stages axially aligned with each other, the total axial size of the reduction bearing is still less than that of conventional one-stage gearboxes. The serial configuration also lends itself for three or more reduction stages in serial axial relationship. Each stage may have its own output so that the multi-stage reduction bearing may beneficially provide multiple reduction ratios to be used alternatively or simultaneously.

In the alternative parallel configuration, which may beneficially also be combined with a serial combination to achieve three or more reduction stages, a first reduction stage and a second reduction stage are positioned concentrically to each other, wherein the second reduction stage is arranged concentrically around the first reduction stage, wherein an outer ring of the first reduction stage is of one piece with an inner ring of the second reduction stage.

This configuration is in effect a concentric five-ring arrangement with four interposed rings of or with rolling elements constituting the radial bearing, wherein the third of the five concentric rings is part of both reduction stages at the same time. The second, third and fourth ring of the bearing have inner and outer bearing races, the innermost ring has an outer bearing race, the outermost ring has an inner bearing race.

In this case, advantageously one of the inner ring and the central ring of the first reduction stage and one of the central ring and the outer ring of the second reduction stage are affixed or affixable to a supporting structure. The ring common to the first stage and the second stage should not be affixed, since that would decouple the two reduction stages.

The reduction bearing in the parallel configuration preferably has two outputs at different reduction stages and different reduction values. This increases the versatility of the reduction bearing with two or more stages, wherein the outputs at different reduction values may be used alternatively or simultaneously.

The object of the invention is also achieved with an electric motor, which has at least one reduction bearing according to the above-described invention integrated with or into the electric motor, wherein a casing of the electric motor forms a supporting structure for the reduction bearing and a rotor of the electric motor is drivingly connected or integral with an input ring of the reduction bearing. Such an electric motor with integrated reduction bearing may be advantageously used in a robotics application and other applications, where the small size of the combination of the electric motor and the integrated inventive reduction bearing is particularly useful.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic cross sectional representation of an inventive restriction bearing,
- Fig. 2: a schematic perspective representation of the reduction bearing of figure 1,
- Fig. 3a) to c): a schematic representation of an inner ring of the inventive reduction bearing,
- Fig. 3d) to f): a schematic representation of an inner ring of an embodiment of the inventive reduction bearing, wherein two eccentric rings are used at the reduction stage,
- Fig. 4a) to c): a schematic representation of a center ring of the inventive reduction bearing,
- Fig. 4d): a schematic representation of a center ring of the inventive reduction bearing in a further embodiment,
- Fig. 5a) to c): a schematic representation of an outer ring of the inventive reduction bearing,
- Fig. 6a) to d): a schematic representation of a reduction stage of a reduction bearing according to the invention,
- Fig. 7a) to e): a schematic representation of another embodiment of an inventive reduction bearing,
- Fig. 7f) to h): a schematic representation of a reduction stage of a reduction bearing according to an embodiment of the invention with two eccentric rings at the reduction stage,
- Fig. 8a) to d): a schematic representation of a two stage inventive reduction bearing in a parallel configuration,
- Fig. 9a) to d): a schematic representation of a two stage reduction bearing of the invention in serial configuration,
- Fig. 10a), b): a schematic representation of an electric motor according to the invention, and
- Fig. 10c): a schematic representation of a further embodiment of an electric motor according to the invention.

In the drawings, the same or similar types of elements or respectively corresponding parts are provided with the same reference numbers in order to prevent the item from needing to be reintroduced.

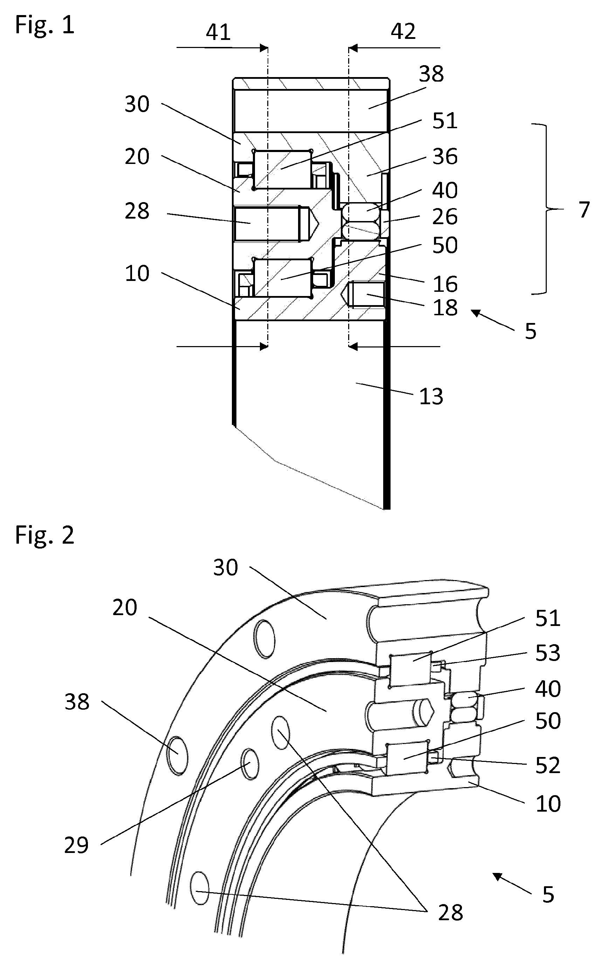

Figure 1 shows schematically a cross section through an exemplary embodiment of a reduction bearing 5 according to the invention. The reduction bearing 5 comprises three concentric rings, namely an inner ring 10, a center ring 20 and an outer ring 30. In the left part, a bearing plane 41 is marked which contains parts of the three concentric rings 10, 20 and 30 and two concentric rings of or with rolling elements 50, 51 placed between, respectively, the inner ring 10 and the center ring 20, and the center ring 20 and the outer ring 30. The elements in the bearing plane 41 therefore constitute a radial rolling bearing with three rotatable rings 10, 20, 30. The rolling elements 50, 51 are cylinders by way of example, but also any other kind of or with rolling elements used in bearings may be used, such as balls, needles, etc.

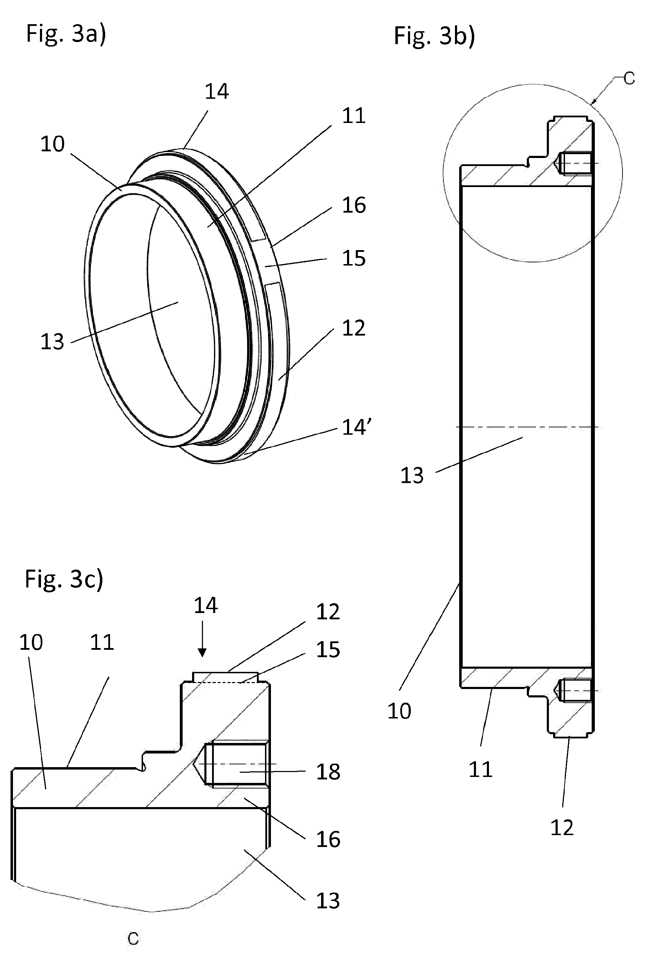

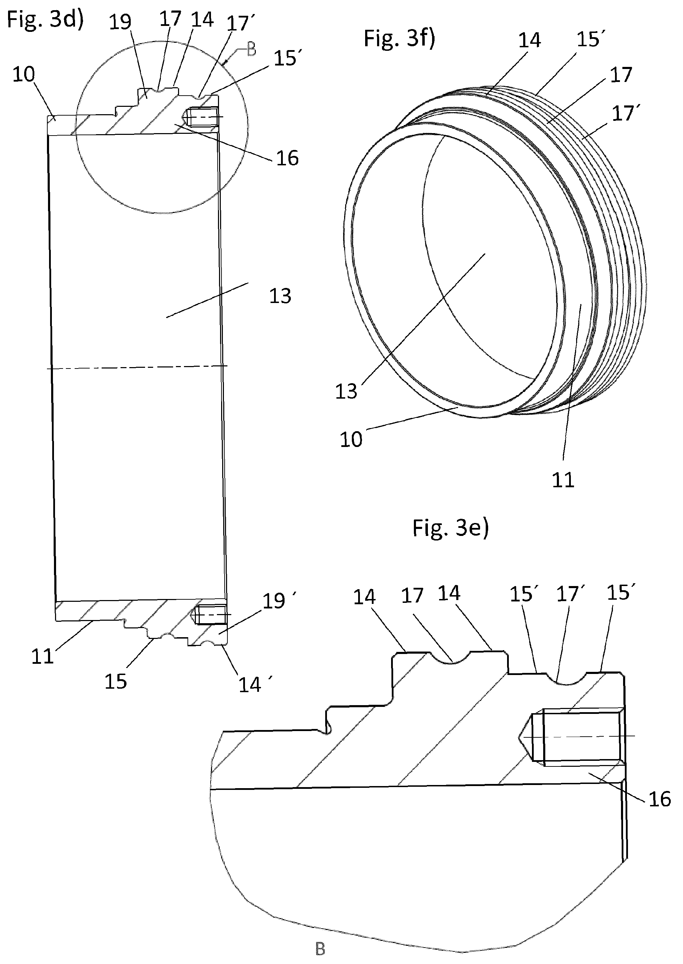

The three rings 10, 20, 30 have extensions 16, 26, 36, respectively, which extend axially from the rings 10, 20, 30 and lie in a common reduction stage plane 42. They constitute a reduction stage 7 consisting of a disc-shaped inner ring extension 16 which at its outer circumference is in contact with radially moving elements 40 caged inside radially oriented channels inside the center ring extension 26, as well as the outer ring extension 36, the inner circumferential surface of which contacts the radially moving elements 40. The structure of the circumferential surfaces 12 of the inner ring extension 16 and the outer ring extension 36 will be discussed in connection with figures 3, 5 and 6.

Figure 2 shows a schematic perspective view of the reduction bearing 5 according to figure 1. It can be seen that the rolling elements 50, 51 of the bearing part are caged in rolling element cages 52, 53. It is also shown that the reduction bearing 5 has a central opening 13 which constitutes a significant portion of its total diameter. In addition, three holes for affixation and connection to input and output means are shown in the center ring 20 and the outer ring 30, namely in input connection 18 in the inner ring extension 16, an output connection 28 in the center ring 20 and a through hole 38 in the outer ring 30 for affixation to a supporting structure.

A detailed view of the inner ring 10 is shown in figures 3a), 3b), 3c), 3d), 3e) and 3f). Figure 3a) shows a perspective view of inner ring 10 having a large central opening 13 and a bearing part configured as a circular bearing race 11. This bearing race 11 supports the inner circle of or with rolling elements 50 shown in figures 1 and 2. In the axial direction, the disc-shaped inner ring extension 16 is shown which has a non-circular outer circumferential surface 12. As depicted in figure 3a), the portion next to the reference numeral 16 is configured as a valley 15 having a minimum diameter, whereas above and below this portion, the circumferential surface 12 shows two shallow peaks 14, 14', providing the total circumferential surface 12 with an elliptical shape. Another valley is located opposite to the valley 15. The surface 12 may also have three or more peaks.

Figure 3b) shows a more detailed cross-sectional view of the inner ring 10, the part C of which is shown in a magnified version in figure 3c). The circumferential surface 12 has a central part slightly elevated over its boundaries, marking a peak 14. This elevated central part will vanish at the position of a valley 15 halfway between two peaks 14, 14'. The surface at a valley position is indicated with a dashed line in Fig. 3c). This variation in height causes the linearly moving elements 40 depicted in figures 1 and 2 to perform a radial movement in the respective radial channels in the center ring extension 26.

Figures 3d), 3e) and 3f) show a schematic representation of the inner ring 10. Figure 3d) is a cross section view, figure 3e) is an enlarged view of part B of figure 3d), and figure 3f) is a perspective view of the inner ring 10. There is shown a preferred embodiment of the invention. At the reduction stage, two eccentric rings 19, 19' of circular shape are used instead of one disk with two peaks. The circumferential surface of the two eccentric rings 19, 19' is formed by two rings radially shifted relative to each other and also to the common axis of the inner ring. By this measure, two peaks 14, 14' and two valleys 15, 15' are created on the extension of the inner ring. The valley 15 is opposite to the valley 15' and the peak 14 is opposite to the peak 14'. The bearing races 17, 17' of the two rings 19, 19' are profiled and are integral part of the inner ring extension. With this embodiment, it is preferred to use balls as rolling elements. Having the bearing races 17, 17' being integrated in the inner ring extension, the bearing races 17, 17' are very precisely formed.

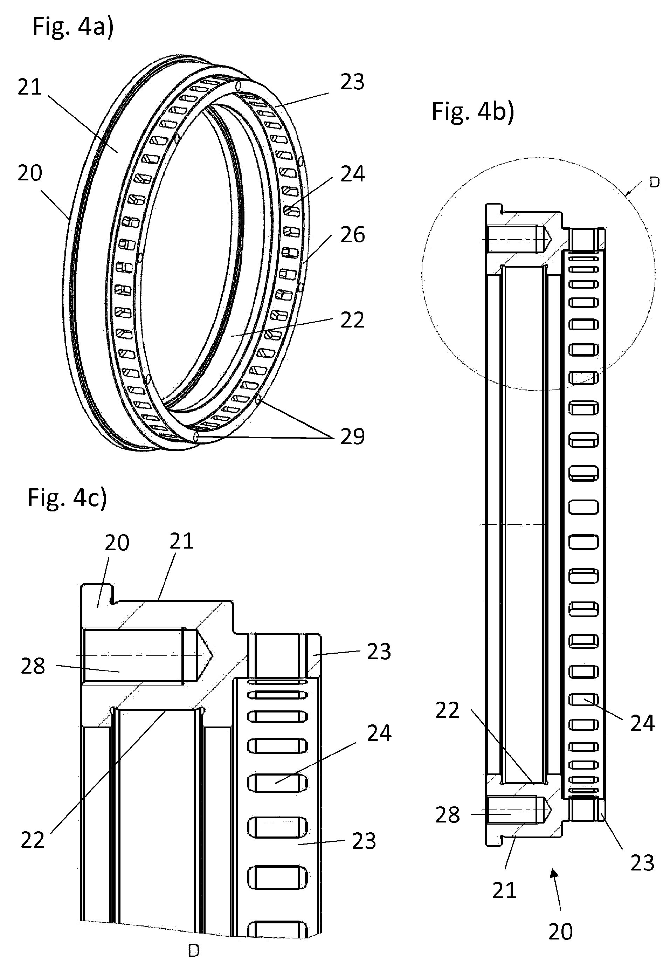

In figures 4a), 4b), 4c), the center ring 20 is depicted schematically in more detail. As shown in the perspective view in figure 4a), center ring 20 consists of a bearing part with a circular bearing race 21 on the outside and a circular bearing race 22 on the inside, the bearing races 21, 22, respectively, being in contact with the rolling elements 50 and 51 of figures 1 and 2.

The axial center ring extension 26 comprises a cage with radial channels 24 for guiding the linear movement of the radially moving elements 40 depicted in figures 1 and 2. The center ring extension 26 itself is of cylindrical shape. Its inner diameter is slightly larger than the outer diameter of the inner ring extension 16 at peak diameter 14, 14'.

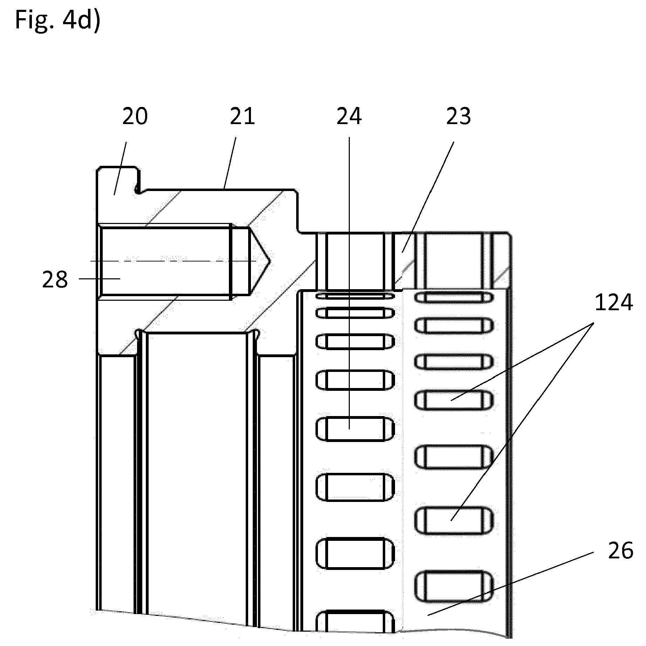

In Fig. 4d) it is shown that the center ring extension 26 is further elongated and additional radial channels 124 which can also be grooves are added. Due to this embodiment, the carrying capacity of the reduction bearing is enhanced. The radial channels 24 and 124 are arranged in two rows.

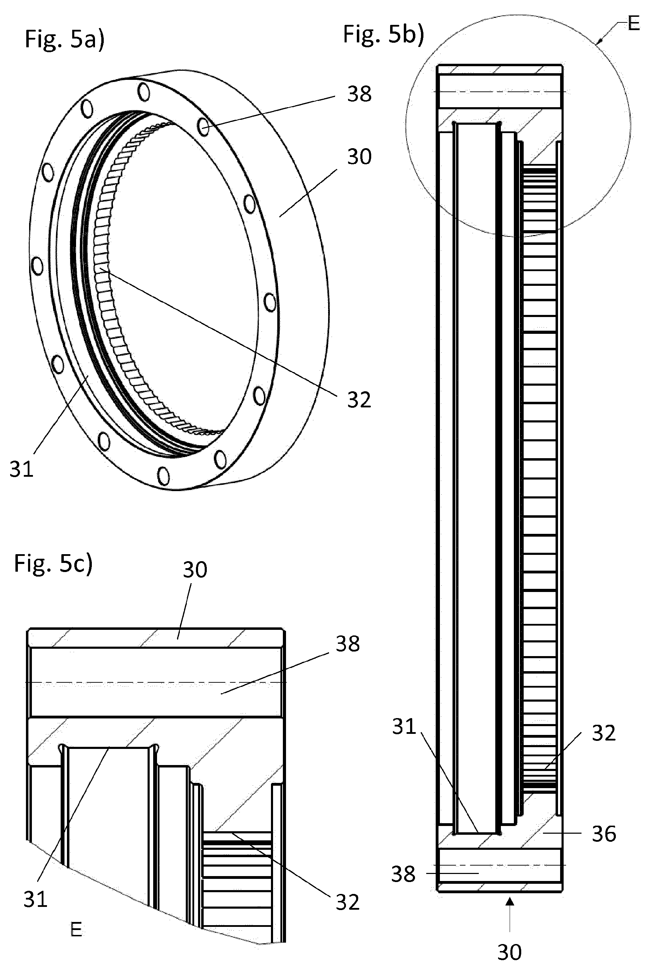

Figures 5a), 5b), 5c) show a schematic representation of the outer ring 30 of the inventive reduction bearing 5 of figures 1 and 2. The outer ring 30 has an inner circumferential bearing surface configured as a bearing race 31 contacting the rolling elements 51 of the outer ring of or with rolling elements shown in figures 1 and 2. In the axial direction, the outer ring extension 36 has an inner circumferential surface whose diameter is smaller than the diameter of the bearing race 31 and has grooves 32, the depth of which roughly matches the difference between peak height 14, 14' and valley height 15, 15' of the peaks on the inner ring extension 16. The variation in the radial height of the grooves 32 follows the variation of the circumferential surface 12 of the inner ring extension 10, shortened in circumferential direction by the reduction ratio of the reduction stage.

The number of grooves 32 is different from the number of radial channels 24, 124 in the center ring extension 26 by a small number, usually by 2, especially in case of 2 peaks.

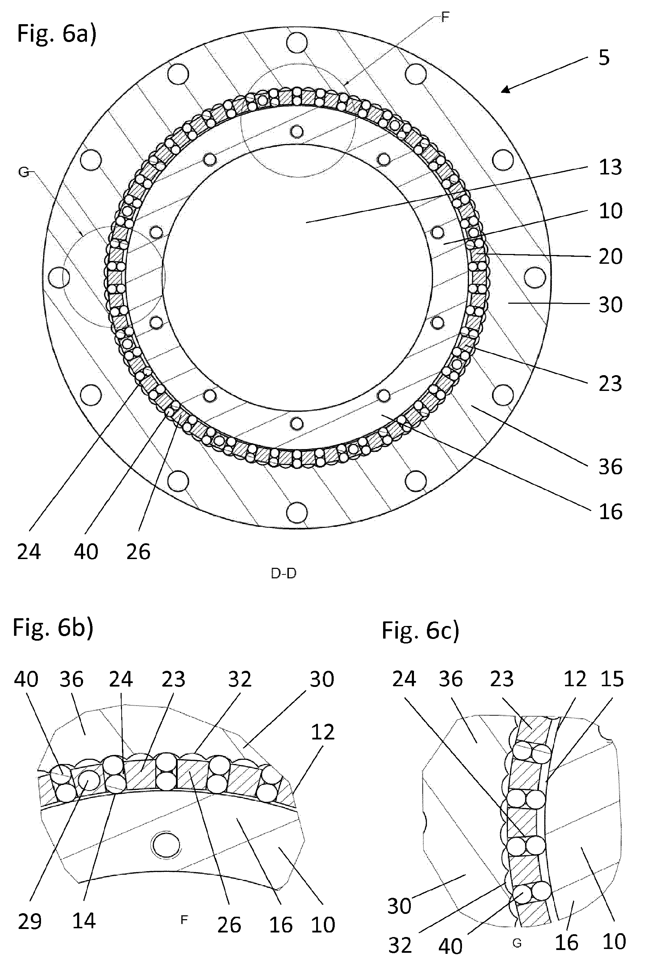

Figures 6a), 6b) and 6c) show a further exemplary embodiment of a single-stage reduction bearing 5 according to the invention with inner ring 10, center ring 20 and outer ring 30, in a cross section through the reduction stage plane 42. The center ring extension 26, which is built as a separator 23, is of circular shape. The outer circumferential surface 12 of the inner ring extension 16 matches the inner diameter of the separator 23 in the top and in the bottom positions while leaving a narrow gap to the inner surface of the separator 23 in the left and right positions shown in figure 6a). This implies that the outer circumferential surface 12 of the inner ring separator 16 is not round, but exhibits two peaks, shown in the top and bottom positions. The inner circumferential surface of the outer ring extension 36 in contrast exhibits a multitude of grooves 32, which are slightly broader than the radially moving elements 40 located inside radial channels 24 of the separator 23.

To increase the carrying capacity of the reduction bearing with respect to keep minimal diameter of reduction bearing there can be placed more rolling elements 40 in two or more rows in a cage with radial grooves 24. See for example Fig. 6b).

To further enhance the carrying capacity of the reduction bearing, there can be skipped every second groove in the separator and herewith to enlarge thickness of wall separators 23 while the reduction ratio will be kept. Through the enlarged wall separators 23 can be guided openings 29 in the axial direction over the center ring 20. For example a screw can be screwed into a guided opening 29.

As can be seen in Fig. 4d), a further enhancement of carrying capacity of the reduction bearing can be achieved by elongation of center ring extension 26 and adding additional grooves 124 and rolling elements, shifted by one tooth in radial direction.

Rotating the inner ring 10 will result in a collective revolving wave-type motion of the radially moving elements 40 in the separator 23. Since the number of grooves is greater by 2 than the number of radial channels 24, a rotation of the inner ring 10 as input of the inventive reduction bearing 5 will cause the radially moving elements 40 to be pushed into the respective grooves 32 of the outer ring extension 36 from off-center into the center of the grooves 32 at the passing of a peak 14, 14', thereby causing the center ring 20 and the outer ring 30 to rotate relative to each other by the amount of one groove 32 with each passing of a peak 14, 14' on the outer circumferential surface 12 of the inner ring extension 16, that is, for each half revolution of the inner ring 10.

Figures 6b) and 6c) show magnified excerpts F and G from figure 6a), respectively, namely at peak height 14 and valley height 15. At peak height 14, as shown in figure 6b), the centrally depicted radially moving elements 40 are pushed into the opposing grooves 32 to the maximum extent. At valley height 15, as shown in figure 6c), the linearly moving elements 40 are opposed by an edge between two adjacent grooves 32. Further rotation of the inner ring 10 will cause the separator 23 to rotate slightly in the clockwise or anti-clockwise direction, depending on the direction of rotation of the inner ring 10, so that with the arrival of the next peak 14 on the outer circumferential surface 12 of the inner ring extension 16, the linearly moving elements 40 will be pushed into the next adjacent groove 32.

As can be seen in figure 1, this is achieved in a very compact design which at the same time assures a reduction action and radial bearing capacity.

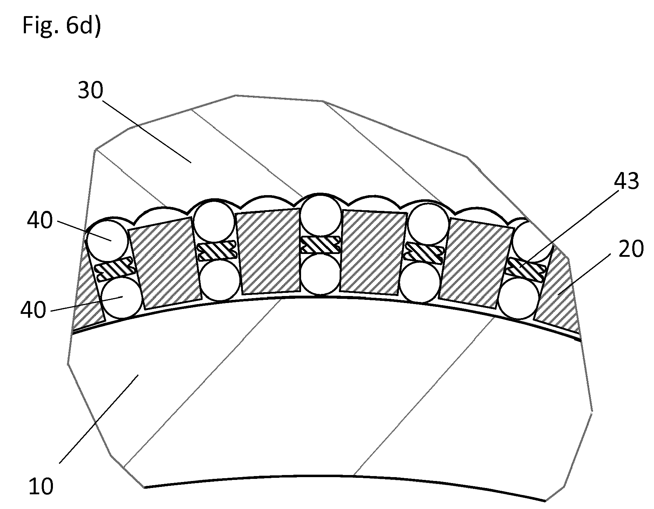

It is furthermore advantageous, as shown in Fig. 6d), to separate the moving elements 40 radially by a separating element 43, which is located between a first and further, in this case, two, moving elements 40 and can be moved radially together with the moving elements 40. This separating element 43 preferably has low-friction surfaces or is made wholly out of a low-friction material and decouples the rotation of the rolling elements 40 from each other, thus reducing friction and wear of the rolling elements 40.

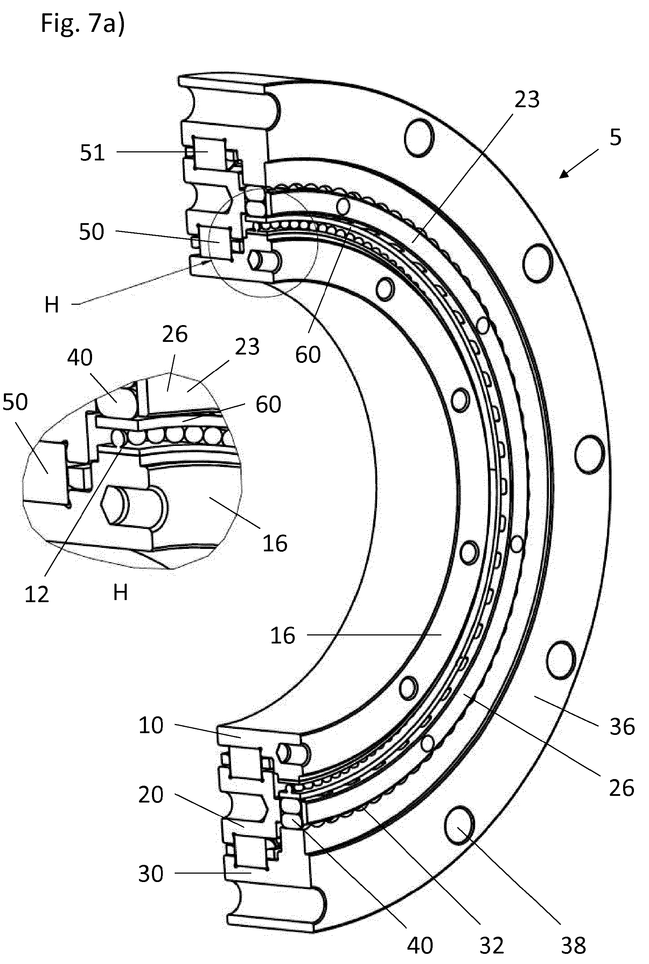

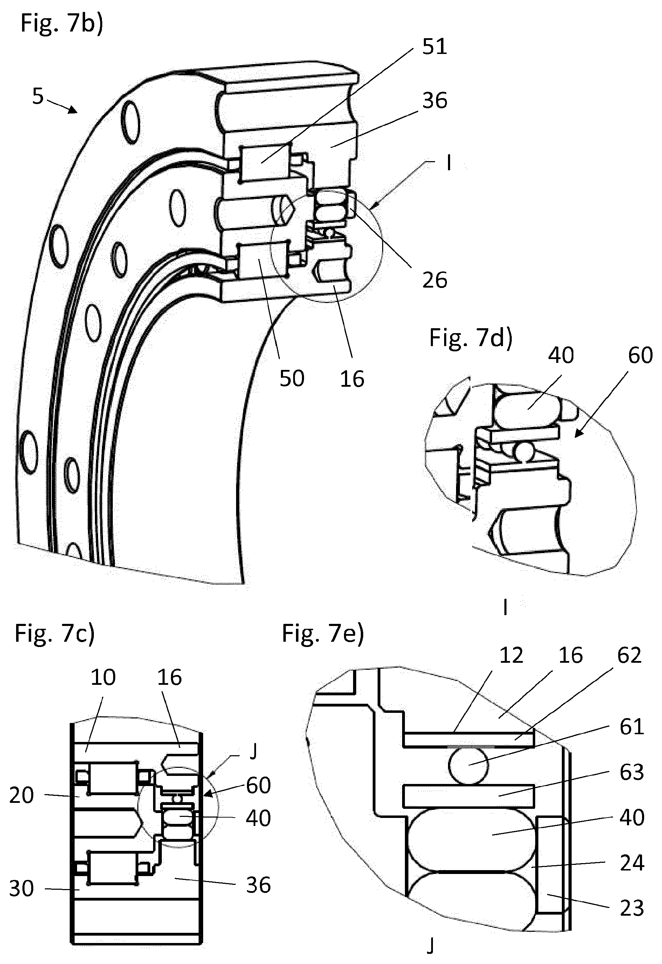

Figures 7a) to 7e) show a further embodiment of a reduction bearing 5 according to the invention. The structure of the reduction bearing 5 shown in a half-open perspective in figure 7a) is almost identical to the one shown in figures 1 and 2, with the exception that a radially flexible roller bearing 60 is interposed between the outer circumferential surface 12 of the inner ring extension 16 and the separator 23 with the radially moving elements 40. As can best be seen in figure 7e), the radially flexible roller bearing 60 comprises rolling elements 61 positioned between an inner bearing race 62 and an outer bearing race 63. Further details are shown in cross section and perspectively in figures 7b), 7c) and 7d). The use of a radially flexible roller bearing 60 reduces friction and enhances the longevity and efficiency of the reduction bearing 5. The radially flexible roller bearing 60 itself does not need to withstand large radial forces, which are absorbed by the rolling elements 50, 51 in the bearing plane 41 instead.

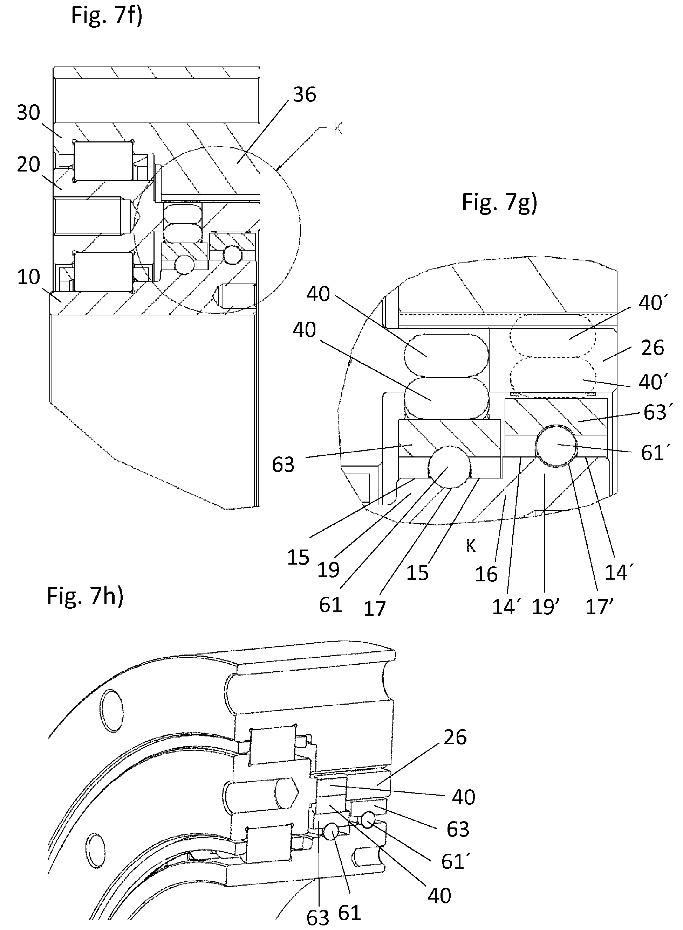

In a preferred embodiment shown in figures 7f), 7g) and 7h), the bearing ring 62 can be replaced by a profiled extension of the inner ring 12, which can act as a bearing race. Figure 7f) shows a schematic cross sectional view of a reduction bearing according to the invention, in case two eccentric rings 19 and 19' are used as an extension of the inner ring 10 as shown in figures 3d), 3e) and 3f) and as an extension of the center ring of figure 4d).

Figure 7g) is an enhanced view of the section K of figure 7f) in a schematic view. Figure 7h) shows the embodiment in a schematic three-dimensional view. It is furthermore shown that bearing races 17, 17' are integrated into the rings 19 and 19' or a part of the surface of the rings 19 and 19'. Furthermore, rolling elements 60, 61 and 40, 40' as well as rings 63 and 63', which can be used from standard bearings, are inserted. The shafts of the two eccentric rings 19, 19' are eccentric. There is no flexible roller bearing or roller racing in this embodiment. This embodiment is more easily to be produced with high precision than the embodiment, in which an ellipsoid is used with two peaks and two valleys instead of two eccentric rings 19, 19'. In case of an ellipsoid, one roller racing or one bearing ring is advantageously flexible.

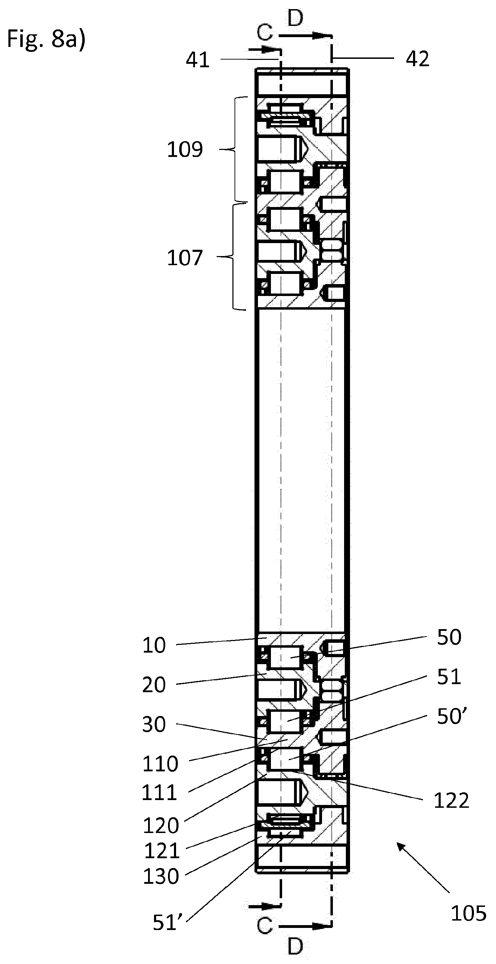

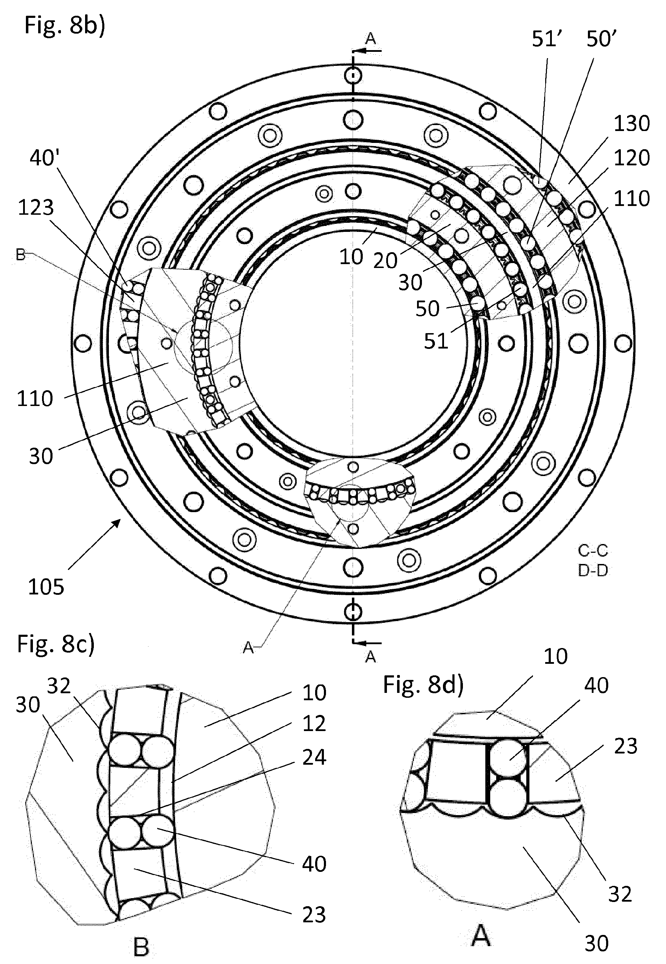

Figures 8a) to 8d) show a further exemplary embodiment of an inventive reduction bearing 105 having two reduction stages 107, 109, arranged concentrically inside each other. A first reduction stage 107 shown in figure 8a) comprises inner ring 10, center ring 20 and outer ring 30. The second reduction stage 109 comprises inner ring 110, center ring 120 and outer ring 130. Outer ring 30 of the first reduction stage 107 is the same as the inner ring 110 of the second reduction stage 109. This middle ring 30/110 of the parallel, that is, concentric two stage configuration shown in figure 8 has two bearing races in the bearing plane 41, namely one on the inside and one on the outside. Accordingly, the parallel configuration two-stage reduction bearing 105 of figure 8 has four concentric circles of the rolling elements 50, 51 in the bearing plane.

Each of the five rings 10, 20, 30/110, 120, 130 has its own axial extensions which are in principle structured in the same way as the ones depicted in the previous figures.

Figure 8b) shows the two-stage reduction bearing 105 from one side with three areas opened up to show different parts of the interior of the reduction bearing 105. The opened area in the upper right allows a view into the bearing plane 41 with the rings 10, 20, 30/110, 120, 130 and the rolling elements 50, 51, 50', 51' constituting the radial bearing functionality of the reduction bearing 105.

The lowermost opening with area A is magnified in figure 8d). It is clearly visible that the innermost and first stage 107 is configured in the same way as the single stage embodiment of, for example, figure 6. Figure 8c) shows a magnification of area B. Figures 8c) and 8d) correspond to the views in figures in figures 6b) and 6c), respectively.

In the interior view containing the area B, a glimpse can be had inside the reduction stage plane 42 of the second reduction stage 109, showing that, whereas the radially moving elements 40 in the second reduction stage 109 are bigger than those in the first reduction stage 107 shown, for example, in the area B in figure 8b). The principle of action is the same in the second reduction stage 109 as in the first reduction stage 107.

With this parallel concentric configuration, it is possible to combine two reduction stages into a reduction action having a very large reduction factor calculated as the product of the reduction factor of the first reduction stage 107 and of the reduction factor of the second reduction stage 109. Reduction factors of 10.000 and more can be thus achieved.

Since radial forces are observed by the bearing parts in the bearing plane 41 of the inventive reduction bearing 5, 105, the reduction action incorporated in the structures in the reduction stage plane 42 are largely free of radial forces, so that blocking because of radial forces is effectively eliminated.

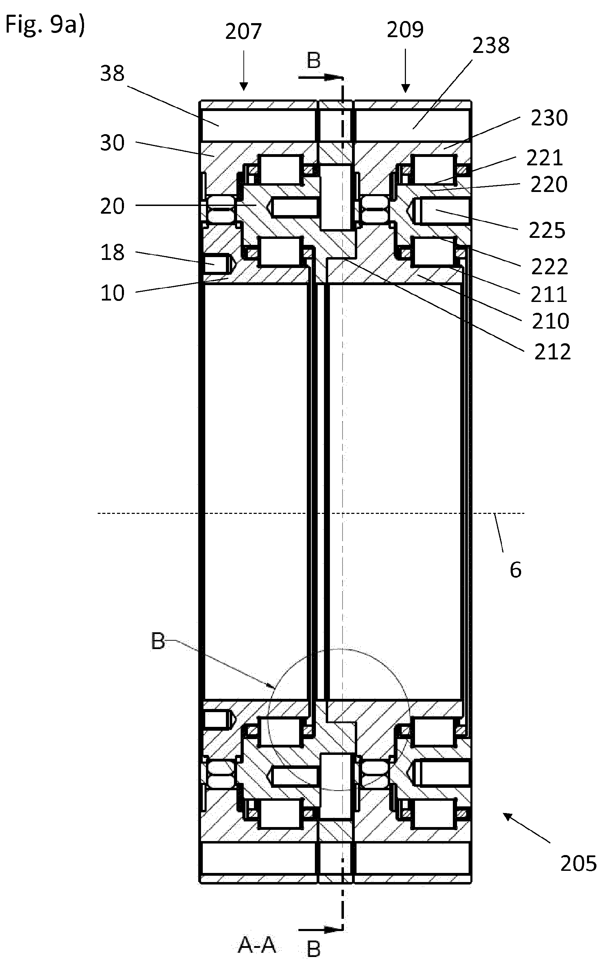

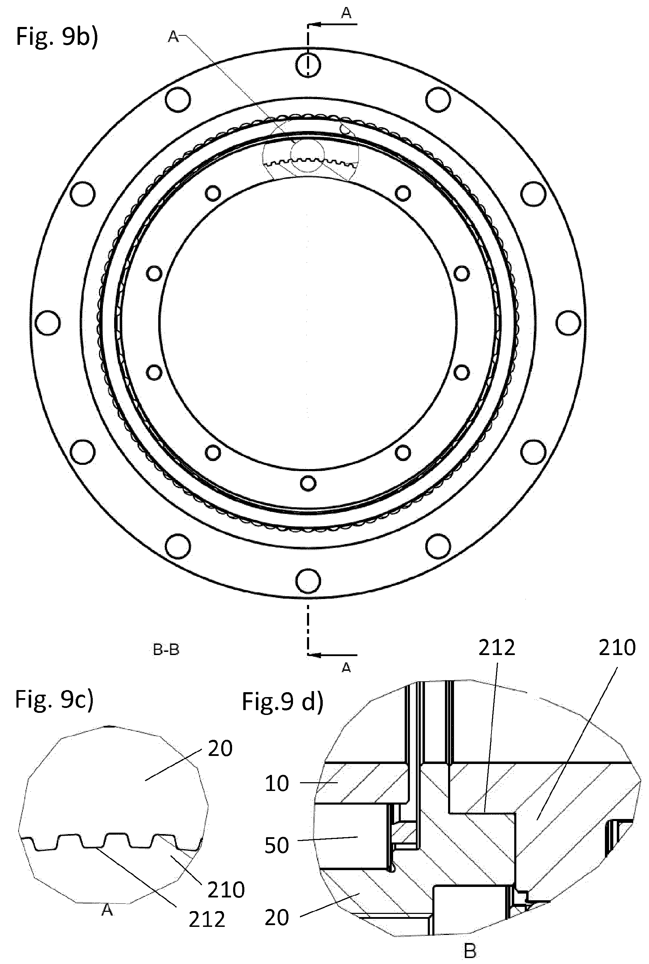

Figures 9a) to 9d) show a further exemplary embodiment of an inventive reduction bearing 205. The reduction bearing 205 is a two-stage in a serial configuration, that is, the two stages 207, 209 are aligned axially along central axis 6 of the reduction bearing 205, which again has a basically circular shape, as shown in figure 9b). Each of the two reduction stages 207 and 209 comprise three concentric rings 10, 20, 30 and 210, 220, 230, respectively, which are mainly structured as shown in the previous figures.

In the configuration shown in figure 9a), the inner ring 10 of the first reduction stage 207 is driven by an input connection 18. The outer ring 30 may be affixed to a supporting structure (not shown) by means of through hole 38. Rotation of the inner ring 10 will cause a slower rotation of the center ring 20 of the first reduction stage 207.

The center ring 20 of the first reduction stage 207 is connected via a driving connection 212, which is built as a spline connection, to the inner ring 210 of the second reduction stage 209. The spline connection, which is shown in an expanded view in figure 9d), has a circumferential toothing shown in an expanded view in figure 9c).

The center ring 220 has an output connection 225. The outer ring 230 likewise has a through hole 238 for connection to a supporting structure. A rotation at the input 18 of the inner ring 10 of the first reduction stage 207 therefore leads to a very slow rotation of the output 225 in the center ring 220 of the second reduction stage 209.

The reduction stages 207, 209 may be built in a modular manner such that reduction stages may be chosen with desired reduction ratios and combined in the way shown in Fig. 9a) to arrive at freely selectable high reduction ratios.

As in the case of the reduction bearing 105 in the parallel configuration of figure 8d), the rotating motion of the two reduction stages 207 and 209 may be used separately and in parallel, adding to the versatility of the invention reduction bearing 205. The two stages 207, 209 may be oriented in the same way, as in the present example shown in figure 9a), or may have back-to-back bearing planes or reduction planes, depending on the desired configuration.

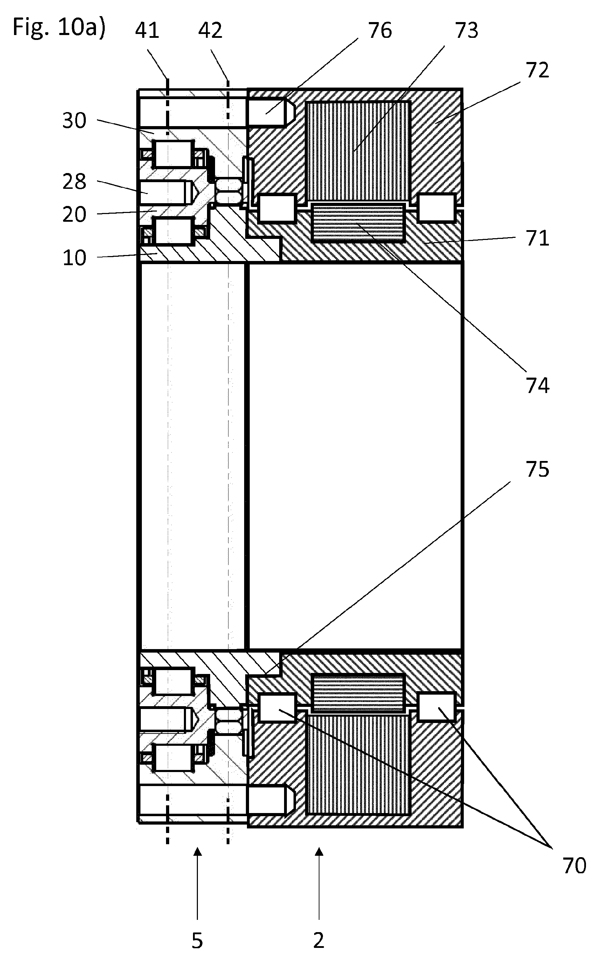

Two exemplary embodiments of electric motors 2, 2' according to the invention are shown schematically in figures 10a), 10b).

The electric motor 2 shown in figure 10a) comprises a casing 72 housing a stator 73 arranged around a rotor 71 with rotor coils 74, wherein the rotor 71 is supported against the casing 72 by means of motor bearings 70 at each side of the coils 74 in the axial direction. A reduction bearing 5 according to the invention is affixed to the casing 72 through a casing connection 76. The rotor 71 is drivingly connected to the inner ring 10 of the reduction bearing 5 by means of a spline connection 75. The center ring 20 has an output connection 28 rotating with a reduced speed with respect to the rotor 71. Here, the reduction bearing 5 is integrated with the electric motor 2 by means of connections 75 and 76.

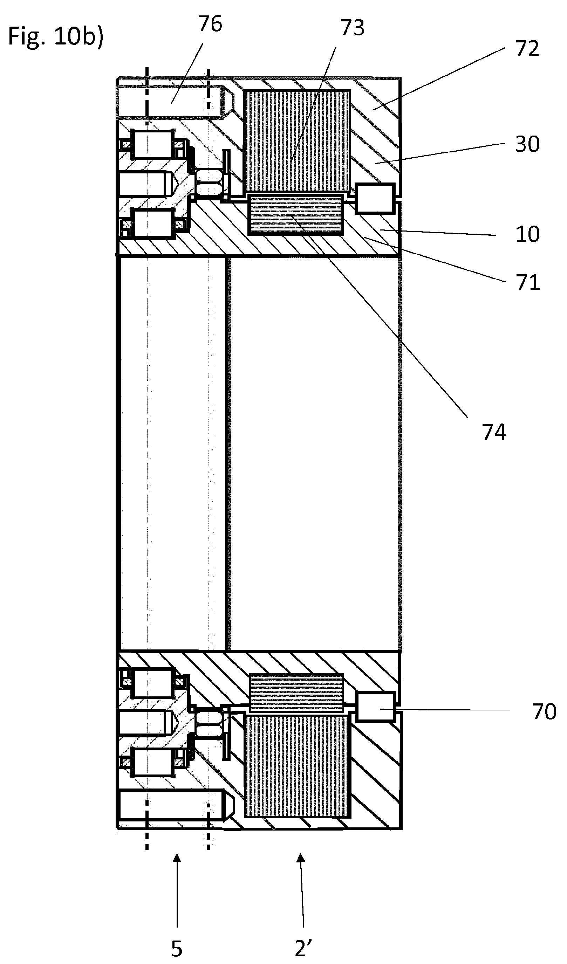

The alternative embodiment of an electric motor 2' shown in figure 10b) differs from the one shown in figure 10a) in that the reduction bearing 5 is fully integrated. The casing 72 is integral with the outer ring 30, the rotor 71 is integral with the inner ring 10 of the reduction bearing 5. There is only one motor bearing 70, since the radial forces on the other side are born by the reduction bearing, in particular the bearing parts arranged in the bearing plane 41.

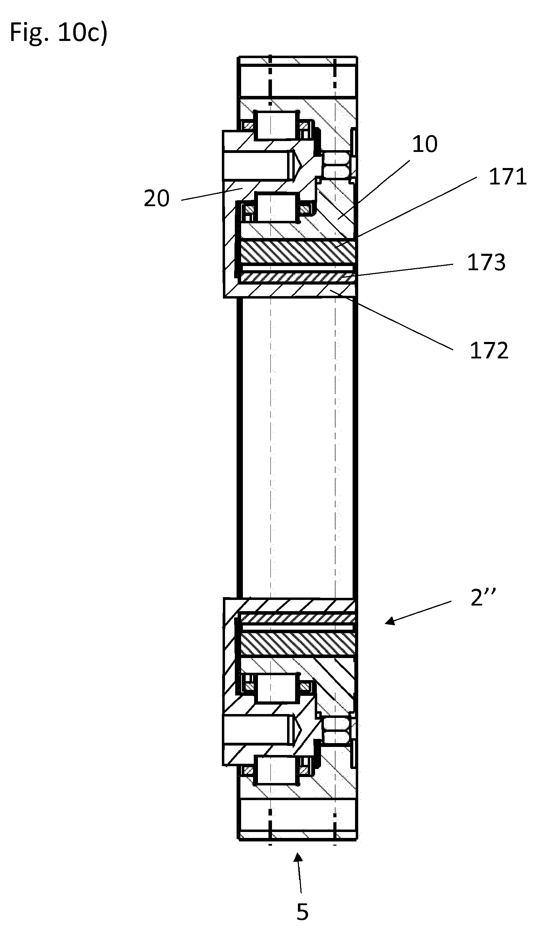

In a further embodiment of an electric motor 2, 2' shown in Fig. 10c) a higher integration is performed. There a thin-Gap type electric motor 2, 2' is shown in Fig. 10c). The reduction bearing 5 is fully integrated. The casing 172 is integral with the center ring 20. The rotor 171 is integral with the inner ring 10 of the reduction bearing 5. The stator 173 has a small gap to the rotor 171. An electric motor 2, 2' can thus be used which can be built very small in size.

Both exemplary embodiments constitute very efficient and compact designs of electric motors 2, 2', which are of great use in robotics and other technical fields requiring compact reduced electric motor action.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 2, 2', 2": electric motor
- 5: reduction bearing
- 6: central axis
- 7: reduction stage
- 10: inner ring
- 11: bearing race
- 12: circumferential surface
- 13: central opening
- 14, 14': peak
- 15, 15': valley
- 16: inner ring extension
- 17, 17': bearing race
- 18: input connection
- 19, 19': eccentric circumferential surface
- 20: center ring
- 21: bearing race
- 22: bearing race
- 23: separator
- 24: radial channels
- 26: center ring extension
- 28: output connection
- 29: opening
- 30: outer ring
- 31: bearing race
- 32: grooves
- 36: outer ring extension
- 38: through hole
- 40, 40': radially moving elements
- 41: bearing plane
- 42: reduction stage plane
- 43: separating element
- 50, 50': rolling elements
- 51, 51': rolling elements
- 52, 53: rolling element cage
- 60: radially flexible roller bearing
- 61, 61': rolling element
- 62: inner bearing race
- 63, 63': outer bearing race
- 70: motor bearings
- 71: rotor
- 72: casing
- 73: stator
- 74: rotor coils
- 75: spline connection
- 76: casing connection
- 105: reduction bearing
- 107: first reduction stage
- 109: second reduction stage
- 110: inner ring
- 111: bearing race
- 120: center ring
- 121: bearing race
- 122: bearing race
- 123: separator
- 124: additional radial channel
- 130: outer ring
- 171: rotor
- 172: casing
- 173: stator
- 205: reduction bearing
- 207: first reduction stage
- 209: second reduction stage
- 210: inner ring
- 211: bearing race
- 212: driving connection
- 220: center ring
- 221: bearing race
- 222: bearing race
- 225: output connection
- 230: outer ring

## Claims

1. Reduction bearing (5, 105, 205) having at least three concentric rings (10, 20, 30; 110, 120, 130; 210, 220, 230), the at least three concentric rings (10, 20, 30; 110, 120, 130; 210, 220, 230) including an inner ring (10, 110, 210), a center ring (20, 120, 220) and an outer ring (30, 130, 230), and at least two concentric rings of or with rolling elements (50, 51; 50', 51'), wherein the inner ring (10, 110, 210) and the center ring (20, 120, 220) are configured as bearing races (11, 22) for an inner of the at least two concentric rings of or with rolling elements (50, 51; 50', 51') and the center ring (20, 120, 220) and the outer ring (30, 130, 230) are configured as bearing races (21, 31) for an outer of the at least two concentric rings of or with rolling elements (50, 51; 50', 51'), wherein the reduction bearing (5, 105, 205) has at least one reduction stage (7; 107, 109; 207, 209), wherein the inner ring (10, 110, 210), the center ring (20, 120, 220) and the outer ring (30, 130, 230) have, respectively, an inner ring extension (16), a center ring extension (26) and an outer ring extension (36) extending in an axial direction of the reduction bearing (5, 105, 205) and lying in a common reduction stage plane (42), wherein the center ring extension (26) is configured to transmit a wave-type reduction action between the inner ring extension (16) and the outer ring extension (36).

2. Reduction bearing (5, 105, 205) according to claim 1, **characterized in that** the inner ring extension (16) is disk-shaped with or without a central opening (13) and has an outer circumferential surface (12) having one or more peaks (14, 14') and the outer ring extension (36) has an inner circumferential surface having grooves (32) or wherein the inner ring extension (16) is disk-shaped with or without a central opening (13) and has an outer circumferential surface (12) having grooves (32) and the outer ring extension (36) has an inner circumferential surface having one or more peaks (14, 14').

3. Reduction bearing (5, 105, 205) according to claim 2, **characterized in that** the inner ring (10, 110, 210) has at least one bearing race (11, 111, 211), wherein in particular the inner ring extension (16) has at least one profiled bearing race (62) or has at least one, preferably two, eccentric bearing race or races (17, 17'), wherein in particular the center ring (20, 120, 220) has at least two bearing races (21, 22, 121, 122, 221, 222) in the bearing part and the center ring extension (26) has at least one radial channel (24, 124) with one or more radially moving elements (40, 40').

4. Reduction bearing (5, 105, 205) according to one of claims 1 to 3, **characterized in that** the center ring extension (26) has structures defining radial channels (24, 124) containing radially moving elements (40, 40') contacting the inner surface of the outer ring extension (36) and the outer circumferential surface (12) of the inner ring extension (16), wherein in particular the radial channels (24, 124) are located in at least one row being arranged, at least substantially, parallel to the common reduction stage plane (42), wherein in particular the number of grooves (32) in the inner circumferential surface of the outer ring extension (36) or the outer circumferential surface of the inner ring extension (16) is greater or smaller than the number of radial channels (24, 124) of the center ring extension (26), wherein in particular the structures of the center ring (20, 120, 220) defining radial channels (24, 124) are exchangeable or of one piece with the center ring (20, 120, 220), wherein in particular a radial depth of the grooves (32), in particular in the inner circumferential surface of the outer ring extension (36), is equal to or more than a height in the radial direction of the peak or peaks (14, 14'), in particular on the outer circumferential surface (12) of the inner ring extension (16), wherein in particular a shape of the peaks (14, 14'), in particular on the outer circumferential surface (12) of the inner ring extension (16) reflects the inverse of a shape of the grooves (32), in particular on the outer ring extension (36), wherein in particular the radially moving elements (40, 40') comprise one or more rows of sliding or rolling elements, in particular needles, balls or cylinders.

5. Reduction bearing (5, 105, 205) according to one of claims 2 to 4, **characterized in that** the circumferential surface having one or more peaks (14, 14') is replaced or formed by at least two eccentric circumferential surfaces (19, 19') having bearing races (17, 17').

6. Reduction bearing (5, 105, 205) according to one of claims 1 to 5, **characterized in that** a radially flexible roller bearing (60) is interposed between the outer circumferential surface (12) of the inner ring extension (16) and the center ring extension (26).

7. Reduction bearing (5, 105, 205) according to one claims 1 to 5, **characterized in that** the roller bearing is an integral part of the inner ring extension (16) and/or the outer ring extension (26).

8. Reduction bearing (5, 105, 205) according to one of claims 1 to 7, **characterized in that** the at least three concentric rings (10, 20, 30; 110, 120, 130; 210, 220, 230) and the at least two concentric rings of or with rolling elements (50, 51; 50', 51') are arranged in a bearing plane (41), wherein in particular there is an even number of peaks (14, 14') or an odd number with at least three peaks (14, 14') on the outer circumferential surface (12) of the inner ring extension (16) or on the inner circumferential surface of the outer ring extension (36).

9. Reduction bearing (5, 105, 205) according to one to claims 1 to 8, **characterized in that** a separating element is located radially between two rolling elements (40, 40').

10. Reduction bearing (5, 105, 205) according to one of claims 1 to 9, **characterized in that** the inner ring (10, 110, 210) and/or the center ring (20, 120, 220) and/or the outer ring (30, 130, 230) has through-holes for affixation to an external supporting structure.

11. Reduction bearing (5, 105, 205) according to one of claims 1 to 10, **characterized in that** the reduction bearing (5, 105, 205) has an axial central opening (13) with a diameter of 90 %, in particular more than 35 %, in particular more than 50 % or 60 % or 70 % of the outer diameter of the outer ring (30, 130, 230).

12. Reduction bearing (105, 205) according to one of claims 1 to 11, **characterized in that** the reduction bearing (105, 205) has two or more reduction stages (107, 109; 207, 209) configured such that at least one first reduction stage (107, 207) is drivingly connected to at least one second reduction stage (109, 209), wherein the reduction stages (107, 109; 207, 209) are axially aligned with each other and/or positioned concentrically to each other, wherein in particular a first reduction stage (207) and a second reduction stage (209) are axially aligned, wherein one of the inner ring (10), the center ring (20) and the outer ring (30) of the first reduction stage (207) is connected with one of the inner ring (210), the center ring (220) and the outer ring (230) of the second reduction stage (209), in particular by means of a spline connection.

13. Reduction bearing (105) according to claim 12, **characterized in that** a first reduction stage (107) and a second reduction stage (109) are positioned concentrically to each other, wherein the second reduction stage (109) is arranged concentrically around the first reduction stage (107), wherein an outer ring (30) of the first reduction stage (107) is of one piece with an inner ring (110) of the second reduction stage (109), wherein in particular one of the inner ring (10) and the central ring (20) of the first reduction stage (107) and one of the central ring (120) and the outer ring (130) of the second reduction stage (109) are affixed or affixable to a supporting structure.

14. Reduction bearing (105) according to one of claims 10 to 13, **characterized in that** the reduction bearing (105) has two outputs at different reduction stages (107, 109) and different reduction values.

15. Electric motor (2, 2'), **characterized in that** at least one reduction bearing (5, 105, 205) according to one of claims 1 to 14 is integrated with or into the electric motor (2, 2'), wherein a casing (72) of the electric motor (2, 2') forms a supporting structure for the reduction bearing (5) and a rotor (71) of the electric motor (2, 2') is drivingly connected or integral with an input ring of the reduction bearing (5).
